Europäisches Patentamt

European Patent Office

Office européen des brevets

(19)

(11) **EP 1 315 053 A2**

(12) ## EUROPEAN PATENT APPLICATION

(43) Date of publication:
**28.05.2003 Bulletin 2003/22**

(51) Int Cl.⁷: **G05B 13/02**

(21) Application number: **02025925.5**

(22) Date of filing: **20.11.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **21.11.2001 US 991034**

(71) Applicant: **Metso Paper Automation OY
33900 Tampere (FI)**

(72) Inventor: **Shakespeare, John
37200 Siuro (FI)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Method and controller to control a process**

(57)     The invention relates to a method and a controller for controlling a process. The process output signal or the control output signal comprises a functional variable and the process output signal is defined for at least one moment of time. The controller performs a functional operation on the signal comprising the functional variable to preserve the functional information.

The controller also forms a cost function of at least the signal comprising the functional variable with the preserved functional information and performs an optimization of the cost function in which the preserved functional information is included. Finally, based on the optimization of the cost function the controller forms at least one process input signal for at least two separate moments of time for controlling the process.

FIG. 4

EP 1 315 053 A2

## Description

### Field of the invention

The invention relates to the control of a multivariate process.

### Background

Regardless whether a process is a single-input-single-output (SISO) process or multiple-input-multiple-output (MIMO) process the control of the process is usually based on statistical analysis. In a MIMO system principal component analysis (PCA) and related methods including Karhunen-Loève (KL) expansions are well known and important analysis tools. The purpose of the control algorithm in general is to minimize the variance of the measured quantity of the process. A known example of such a process control is model predictive control (MPC).

In process control a variable comprises at least one measured value or at least one value formed by the control unit. In a MIMO system a variable can be distinct or non-distinct. However, for example the existing MPC methods treat all values of process input signal and process output signal as distinct variables. The values of a truly distinct variable can be treated as separate values and they are suitable for statistical analysis. The values of non-distinct variables that are called functional variables in this application, however, are samples of a function on a continuum. Thus, values of the individual variables are directly comparable one to another, rather than being distinct. Moreover, the ordering of values within a set is significant. For example, many spectroscopic measurements and cross-machine profiles are multivariable samples of continuous functions, and will possess characteristic functional features, including relations between neighbouring elements.

There are, however, problems with functional variables in the process control when a process is controlled using algorithms of statistical analysis. When functional properties are present, process control based on the minimization of the variance tends to introduce spurious functional features or suppress real ones in the process output, impairing the control and may lead even to loss of control of the process .

### Summary

It is therefore an object of the present invention to provide an improved method and a controller implementing the method. This is achieved by extending the methods of model predictive control to incorporate the functional nature of variables, especially by inclusion of terms formed by applying non-time-domain operators to the functional variables.

The preferred embodiments of the invention are disclosed in the dependent claims.

The invention is based on performing a functional operation on the signal comprising the functional variable to preserve the functional information. Thus, the control action formed by the control algorithm of the control unit depends on both the distinct values and the functional nature of the variable.

The method and arrangement of the invention provides various advantages. The functional nature of the variables of the process input signal or the control input signal can be fully taken into account in the process control. By explicitly incorporating the functional nature of these variables, the performance of the controller can be enhanced, especially with regard to robustness and stability in both the time domain and the non-time domain.

### Brief description of the drawings

In the following, the invention will be described with reference to preferred embodiments and to the accompanying drawings, in which

Figure 1 shows a MIMO process,
Figure 2 shows a MPC control,
Figure 3 shows a functional process,
Figure 4 shows a functional controller, and
Figure 5 shows a paper machine.

### Detailed description

The solution of the invention is well-suited for use in process industry. The process to be controlled can be sheet, film or web processes in paper, plastic and fabric industries, the invention not being, however, restricted to them.

Let us first define some terms used in the application. A controlled variable represents a process output that is controlled. The process output and the controlled variable refer to the measured values of the process. The purpose of the control is to make the control variable to reach predetermined targets or setpoints and to make the controlled variable be predictable. The measurement of the controlled variable can be used for feedback control. A manipulated variable represents a control output and it is used to drive at least one actuator. The manipulated variable is formed in the control unit of the process. The state of the process and the process output depend on how the actuators are driven. Each variable can be represented as a vector or a matrix that comprise at least one value as an element.

Let us now study some basic features of functional and non-functional variables. In general, MIMO that is based on multivariate statistical techniques, treat multivariable observations as aggregates of distinct quantities which are not directly comparable one to another. Each observation is performed at a certain moment of time and each observation is a sample with a certain value of the measured property at that moment of time. In paper industry measured values of for example basis weight, caliper, thickstock consistency, sheet temperature, white water pH are considered distinct values. In a similar way, the values in multivariable actions for actuators in the process may be distinct. Headbox dilution valves, rewet sprays can be mentioned as examples of actuators in which a signal comprising distinct values of actions are fed. If multiple values of these variables are taken at different times, then individual values may be treated as sampled signals or functions. Otherwise, the ordering of values is not significant. In either case, the ordering of values within the set of values is not considered in the statistical analysis that is performed in the control unit of the process. The order of the values is indeed irrelevant to the analysis: reordering the values and repeating the analysis yields the same results, identically reordered.

However, some multivariable data are actually discrete samples of functions on a non-time-domain continuum, rather than aggregates of distinct values. Thus, values of the individual variables are directly comparable one to another, rather than being distinct. Moreover, the ordering of values within a set of values is significant, since a reordering tends to introduce spurious functional features or suppress real ones that impair the control of the process. For example, spectroscopic measurements over a range of adjacent wavelength bands and cross-machine profiles at high spatial resolution are multivariable samples of physical functions. The underlying functions are in principle continuous, and will possess characteristic functional features, including relations between neighbouring values.

These functional variables can occur either as controlled variables or as manipulated variables, or both. In principle, the number of samples used to represent such a functional variable is arbitrary, but in practice is fixed by economic constraints or by features of standardized equipment.

A functional variable differs from variables comprising distinct values in a number of ways. For instance:

» the ordering of values is significant for functional variables
» the values of a functional variable are directly comparable, and share the same units
» operations such as interpolation between values are meaningful for functional variables
» there may be relations between the values, such as correlation between proximal elements independent of the process.

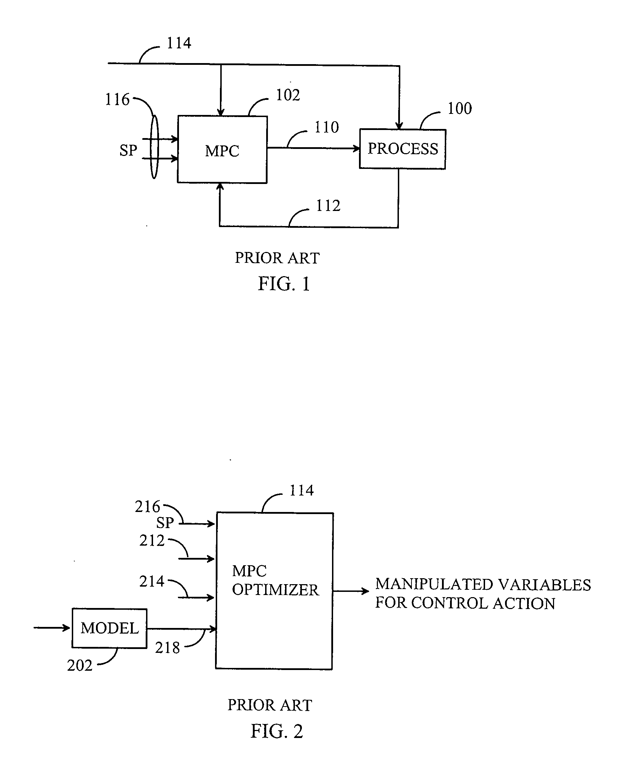

The MIMO system and the MPC will now be examined with reference to Figure 1 and Figure 2. Model predictive control is a well-known control technique for MIMO systems. In general, the actual process 100 is controlled by the signals 110 that comprise manipulated variables and the signals 114 that comprise feedforward variables from other processes. The signals 110 come from the control unit 102 that can use for example MPC algorithm. The signals 114 are often unwanted and disturb both the process 100 and the control unit 102. The feedback signal 112 from the process 100 to the control unit 102 comprises controlled variables which are compared to the predetermined variables of the signal 116.

Figure 2 presents a MPC control unit. Existing MPC methods in block 200 treat manipulated variables and controlled variables as variables with distinct values, and like all process control methods based on statistics MPC methods optimize a cost function that comprises at least one error term that is minimized. The MPC controller 200 receives the feedback signals 212 from the process, disturbance signals 214, signals 216 determining the setpoint values and signal 218 from the model bank 202 determining the estimated step response of the process. The multivariate model that represents the multivariable process dynamics is usually a model matrix. In MPC algorithm at the present moment of time a prediction of the values of the controlled variables over a desired time window is made on basis of the process model and on the estimated future control actions that are the same as or correspond to the future manipulated variables. Of all the possible future control actions only the estimated future manipulated variables that bring the predicted controlled variable closest to the predetermined setpoint are selected. That is performed by optimizing a cost function that comprises the prediction error, a difference with the minimum cost state of the actuators and the estimated control changes in the future. A cost function is for example a weighted 2-norm or weighted $\infty$-norm of these predicted values. Typically, only the current control action using the present manipulated variables is enforced. The cost function can also be subject to constraints on the values of the manipulated variables and on the magnitudes of control actions.

One example of a MIMO process is cross-machine control, in which the cross-machine profiles are essentially samples of functions on a continuous sheet. Another example of a MIMO process is control of color or other spectroscopic quantities (including composition variables extracted from spectroscopic measurements), in which the spectroscopic measurement comprises samples of a continuous spectrum over a continuous range of wavelengths.

Let us now examine the mathematics behind some basic features of a known control method similar to MPC. The exact form of the process model is unimportant, but it can be represented for simplicity as:

$$v_j = v_{j-1} + \sum_{m=j-d}^{j-1} \sum_i u_{im} z_{im} \, , \qquad (1)$$

where $v_j$ is a controlled variable, $u_{im}$ is a value of a manipulated variable, $z_{im}$ is a coefficient in the model, m is index for time, j is current moment of time, i is index for the variable. The cost function for a standard MPC is given as a 2-norm, but other norms can be used equally well. In general a g-norm $|x|_g$ can be expressed as

$$|x|_g = \left( \sum_{i=1}^n x_i^g \right)^{1/g}$$

, where x is a vector or matrix and $x_i$ is an element or value of x. Often the root $(\ )^{1/g}$ is omitted because the term

$$\sum_{i=1}^n x_i^g$$

is directly comparable to the g-norm. A typical cost function q can be expressed as:

$$q = \sum_{j=1}^n w_{kj} \left( r_{kj} - v_{kj} \right)^2 \qquad (2)$$

where

$r_{kj}$    is setpoint trajectory for controlled variable *k* at the time moment *j*
*j*    is index for present and future moments of time (j = 0 is now)
$v_{kj}$    is value of controlled variable *k* at time moment *j*
$w_{kj}$    is weight factor for error in controlled variable k at time moment *j*

and the values $v_{kj}$ at times in the future are simulated using the process model and knowledge of past control actions. The error term $(r_{kj} - v_{kj})^2$ is comparable to the absolute value of the difference between the setpoint variable r and the controlled variable v. The setpoint trajectory $r_{kj}$ is usually provided by other means, such as a human operator or a table of product specifications. Usually, the weight factors $w_{kj}$ define a time window for each controlled variable, and a relative importance of that variable compared to the others at each time in the window. Individual variables can have different time windows, and their relative importance need not be constant in that window.

In general, there is also a cost associated with each manipulated variable, and a cost associated with control action magnitudes, so that the cost function q becomes:

$$q = \sum_{j=1}^n w_{kj} \left( r_{kj} - v_{kj} \right)^2 + \sum_{j=0}^m b_i \left( p_i - u_{ij} \right)^2 + \sum_{j=0}^m c_{ij} \Delta u_{ij}^2 \qquad (3)$$

where

$p_i$    is minimum cost state for manipulated variable *i*,

$\Delta u_{ij}$ is change in manipulated variable $i$ at time moment $j$ and

$b_i$ is a cost multiplier for manipulated variable $i$ and $c_{kj}$ is a weight factor for control action $i$ at time $t_j$. The change in manipulated variable $\Delta u_i$ is expressed as $\Delta u_i = u_i - u_{i-1}$. There are also constraints on the manipulated variables, typically of a simple limit type, and there may be an amplitude constraint on the control actions expressed as limitations to the manipulated variable:

$$u_{i,min} \leq u_{ij} \leq u_{i,max}$$

$$\|\Delta u_{ij}\| \leq \Delta u_{i,max}$$

where $u_{i,min}$ and $u_{i,max}$ are the upper and lower limits for manipulated variable $u_i$, and $\Delta u_{i,max}$ is maximum allowed single change of the manipulated variable. A standard MPC comprises finding a schedule of $m + 1$ control states $u_{ij}$ from $t_0$ to $t_m$ which minimizes the cost function $q$

$$\min_u \left\{ q \middle| u_{i,\min} \leq u_{ij} \leq u_{i,\max}, \left\|\Delta u_{ij}\right\| \leq \Delta u_{i,\max} \right\} \qquad (4)$$

in which none of the manipulated variables violate their constraints $\|\Delta u_{ij}\| \leq \Delta u_{i,max}$ and $u_{i,min} \leq u_{ij} \leq u_{i,max}$.

The first action in the schedule, $\Delta u_{i0}$, is usually then enforced. Many variations exist, such as providing the constraint limits or the cost multipliers or the minimum cost state of the manipulated variables as trajectories. Also, the time intervals in the future need not be equal. Moreover, the process models and future predictions of the controlled variables can incorporate the effects of disturbance variables in addition to the effects of manipulated variables.

There are many optimisation algorithms which can be used to find the solution to an MPC problem, some of which are best suited to particular forms of the cost function, or which require particular process model formulations, or provide some computational efficiency for a particular case. However, the exact algorithm is not relevant to the current discussion, as any of many such algorithms can be applied to each MPC problem.

Functional variables have been treated as collections of ordinary variables with distinct values, and the MPC problem has been formulated as above, with each element of each functional variable treated as a distinct value. This ignores both the possibility of functional constraints on manipulated functional variables, and the possibility of functional penalties on either controlled or manipulated functional variables. Both of these ignored possibilities occurs in practice, especially for cross-machine control of profiles in a paper machine as described in Shakespeare, J., Pajunen, J., Nieminen, V., Metsälä, T., "Robust Optimal Control of Profiles using Multiple CD Actuator Systems", *Proc. Control Systems 2000 (Victoria BC, 1-4 May 2000)*, p.306-310.

Let us now examine the present solution that extends the cost function $q$ in a way which is advantageous if at least one of the manipulated variables or at least one of the controlled variables is a functional variable. For simplicity, the extension will be illustrated for the case where all controlled variables and all manipulated variables are functional variables, as can happen, for example, in CD control. Let functional variables be denoted by the upper case character corresponding to the lower case quantities defined above. Each such variable is multi-valued, and may be subject to a constraining relation.

The general functional cost function $Q$ particularly in MPC control method can be represented as:

$$Q = \sum_{i=1}^{n} w_{kj} \left(R_{kj} - V_{kj}\right)^T F_k \left(R_{kj} - V_{kj}\right) + \sum_{i=0}^{m} \left(L_k V_k\right)^T \left(L_k V_k\right) + \dots$$

$$+ \sum_{j=0}^{m} b_i \left(P_i - U_{ij}\right)^T G_i \left(P_i - U_{ij}\right) + \sum_{i=0}^{m} \left(M_i U_{ij}\right)^T \left(M_i U_{ij}\right) + \dots$$

$$+ \sum_{i=0}^{m} c_{ij} \Delta U_{ij}^{T} H_{i} \Delta U_{ij} + \sum_{i=0}^{m} \left( N_{i} U_{ij} \right)^{T} \left( N_{i} U_{ij} \right) + \ldots \qquad (5)$$

The optimization of the cost function Q can be expressed as:

$$\min_{U} \left\{ Q \mid U_{i,min} \le U_{ij} \le U_{i,max}, \left\| \Delta U_{ij} \right\| \le \Delta U_{i,max}, A_{i,min} < A_{i} U_{ij} < A_{i,max} \right\} \qquad (6)$$

where T is transpose, $b_i$ is a cost multiplier for manipulated variable $i$ and $c_{kj}$ is a weight factor for control action $i$ at the moment of time $j$ and

| | |
|---|---|
| $F_k$ | is an inner product operator for controlled variable $k$, |
| $G_i$ | is an inner product operator for manipulated variable $i$, |
| $H_i$ | is an inner product operator for change in manipulated variable $i$, |
| $P_i$ | is a minimum cost state for manipulated variable $i$, |
| $R_{kj}$ | is a setpoint trajectory for controlled variable $k$ at time moment j, |
| $U_{ij}$ | is a value of manipulated variable $i$ at time moment j, |
| $V_{kj}$ | is a value of controlled variable $k$ at time moment $j$, |
| $\Delta U_{ij}$ | is a change in manipulated variable i at time moment j, |
| $L_k$ | is a functional penalty operator for controlled variable $k$, |
| $M_i$ | is a functional penalty operator for manipulated variable $i$, |
| $N_i$ | is a functional penalty operator for change in manipulated variable $i$, |
| $A_i$ | is a functional constraint operator for manipulated variable $l$ and |
| $A_{i,min}$ and $A_{i,max}$ | are the upper and lower limit functions for the functional. constraint. |

The optimisation of the functional cost function Q in the present solution comprises the minimization of the predicted error between a predetermined setpoint variable $R_k$ and a controlled variable $V_k$

$$\sum_{j=1}^{n} w_{kj} \left( R_{kj} - V_{kj} \right)^{T} F_{k} \left( R_{kj} - V_{kj} \right)$$

, the deviation from the minimum cost state as a difference between a predetermined minimum cost state variable $P_i$ and a manipulated variable $U_i$

$$\sum_{j=0}^{m} b_{i} \left( P_{i} - U_{ij} \right)^{T} G_{i} \left( P_{i} - U_{ij} \right)$$

, the change in a manipulated variable

$$\sum_{j=o}^{m} c_{ij} \Delta U_{ij}^{T} H_{i} \Delta U_{ij}$$

with the at least one penalty term

$$\sum_{j=o}^{m} \left( M_{i} U_{ij} \right)^{T} \left( M_{i} U_{ij} \right)$$

and

$$\sum_{j=o}^{m}\left(N_i\Delta U_{ij}\right)^T\left(N_i\Delta U_{ij}\right)$$

. When there is a constraint related to the manipulated variable U of the process input signal the minimization of the cost function is performed within the limits of the constraint $U_{i,min} \leq U_{ij} \leq U_{i,max}$, $\|\Delta U_{ij}\| \leq \Delta U_{i,max}$ and $A_{i,min} < A_i U_{ij} < A_{i,max}$.

The present solution can be described in the following way with reference to the formulas (5) and (6). When a process output signal or the control output signal comprises at least one functional variable, a functional operation on the signal comprising the functional variable is performed to preserve the functional information. Then at least one process input signal for at least two separate moments of time is formed using the process output signal and the control output signal with the preserved functional information. To form the at least one process input signal the process output signal is defined for at least one moment of time and the cost function of at least the signal comprising the functional variable with the preserved functional information is formed. The process output signal is for example defined for at least one future moment of time and the control output signal is formed for at least the present time. Then the optimization of the cost function $\min_{U}\{Q|U_{i,min} \leq U_{ij} \leq U_{i,max}, \|\Delta U_{ij}\| \leq \Delta U_{i,max}, A_{i,min} < A_i U_{ij} < A_{i,max}\}$ in which the preserved functional information is included is performed. Finally based on the optimization of the cost function at least one process input signal is formed for at least two separate moments of time for controlling the process. To optimize the cost function Q commonly known minimization techniques, including gradient, conjugate gradient, newton, quasi-newton, and simplex algorithms can be applied, just as in the known MPC method.

In the optimisation of the functional cost function Q the inner product operators $F_k$, $G_i$ and $H_i$ replace the quadratic terms for calculating the value corresponding to the absolute value of the terms

$$\sum_{j=1}^{n} w_{kj}\left(R_{kj} - V_{kj}\right)^T F_k\left(R_{kj} - V_{kj}\right),$$

$$, \quad \sum_{j=o}^{m} b_i\left(P_i - U_{ij}\right)^T G_i\left(P_i - U_{ij}\right)$$

and

$$\sum_{j=o}^{m} c_{ij}\Delta U_{ij}^T H_i \Delta U_{ij}\,.$$

Generally, the inner product can be thought of as a weighting function on the space formed as the product with itself of the continuum on which the functional variable is defined, represented in discrete form as a matrix. Usually, the matrix is diagonal, but in the general case it need not be. The inner product can be defined as $a \cdot b = \bar{a}^T \cdot b$, where $\bar{a}^T$ is a transpose of the complex conjugate of a matrix (or a vector) a. When the matrix a is real, the complex conjugate of the matrix a is the same as the matrix a. The elements of the matrix a can be expressed as $a = [a_1\ a_2\ ...\ a_n]$, where the elements $a_1 ... a_n$ can be scalar values or matrices. The 2-norm of the matrix a can be defined with the help of the inner product as $\|a\| = \sqrt{a \cdot a} = \sqrt{\bar{a}_1 a_1 + ... + \bar{a}_n a_n}$. The inner product operators F, G and H can be maximum absolute value operators, which are essentially the same as the $\infty$-norm, but in this case they are not expressed using matrices.

The most important parts of the present solution, however, are the functional penalty terms

$$\sum_{j=o}^{m}\left(L_k V_{kj}\right)^T\left(L_k V_{kj}\right),$$

$$\sum_{j=o}^{m}\left(M_{i}U_{ij}\right)^{T}\left(M_{i}U_{ij}\right),$$

$$\sum_{j=o}^{m}\left(N_{i}\Delta U_{ij}\right)^{T}\left(N_{i}\Delta U_{ij}\right)$$

and $A_{i,\min} < A_i U_{ij} < A_{i,\max}$ which is the functional constraint. The functional information of a functional variable V, U or $\Delta U$ is preserved in the optimisation by performing the functional operation defined by any of the functional operators L, M, N or A.

The L operator defines the undesired patterns or undesired functional features in a controlled functional variable. For example, an operator L in a cross-machine profile controller in a paper machine could be an FIR bandpass filter which extracts those spatial frequencies which are most harmful in the end use of the paper. Instead of the operator L also the complement of the operator L can be used. In matrix form the complement of the operator L can be expressed as (I - L), where I is the unity matrix. Then the complementary operator (I - L) defines the desired pattern of the controlled variable. The present control method comprises at least one of them. The pattern of the variable is dependent on the shape or properties of the end product (e. g. CD values of paper), and is usually defined by the manufacturer or customer. The penalty terms can also be weighted. The very basic idea behind the present solution is that the variance of the values of the functional variable is biased by the shape of the function (or the profile) that the values form. The biased pattern of the variable is taken into account when the manipulated variable is calculated. Because the pattern of the function depends on the order of the values, the ordering of the values becomes important.

Operators M and N may be used to suppress those patterns in the actuator or control action for which the process response is small. In this way, rank deficiencies in the process can be eliminated, so that the controller has a good condition number and the control action can be computed without loss of precision. For instance, in CD processes, high spatial frequencies in an actuator do not produce a significant effect in the profile, such that $ZN\Delta U \approx 0$, if N is a high-pass spatial filter and Z is the response matrix for the process. In some cases, there can be specific lower spatial frequency bands which are also ineffective. Since these frequencies correspond to modes whose singular values are zero or near zero, they can lead to a rank deficiency or bad condition number. By specifying M and/or N to be filters which pass these ineffective frequency bands, the rank deficiency is removed and the condition number is improved. The same phenomena occur in other representations of the process, such as those using orthogonal polynomials or wavelets instead of spatial frequencies.

Since process models are approximations, rather than exact descriptions of the process, there is usually some uncertainty regarding these ineffective features or spatial frequencies. Thus, it is advantageous for the operators M and N to incorporate a robustness margin, such as by passing a slightly broader frequency band than the nominally ineffective band. Also, there may be some spatial frequencies at which the process model is unreliable, due to gain uncertainty or phase uncertainty in the spatial frequency domain, which can lead to instability in the spatial domain as described in S. Nuyan, J. Shakespeare, C. Fu, "Robustness and Stability in CD Control", *Proceedings of Control Systems 2000 (Victoria BC, 1-4 May 2000),* p.193-196. Robustness of the controller for specified amounts of uncertainty at each spatial frequency leads to a set of spatial frequencies which are not reliably controllable, and by including these bands in the pass bands of operators M and N, the controller becomes robust in the CD domain. Note that this non-time-domain robustness is independent of time domain robustness, and that although prior art MPC generally provides robustness with respect to some time domain uncertainties, it provides no robustness with respect to non-time-domain uncertainties.

The association of the values of a variable with a desired order is performed with the functional penalty operators L, M, N and A. The functional penalty operators L, M, N and A can be any finite operator which is sufficiently compact to be evaluated on the function. Examples include derivatives of integer or non-integer order, piecewise definite integrals of integer or non-integer order, or any combination of these. Further examples include any finite impulse response filter (FIR-filter), such as band-pass, band-stop, high-pass, or low-pass filters, or any pattern-matching filter. For example the functional constraint operator A can be a derivative operator of the second order. The second order derivative constraint can limit the amount of bending in a device whose shape is manipulated by the actuator U. This is particularly advantageous in paper machines when controlling properties of the paper by manipulating the shape of the slice lip of a headbox or the coater blade in a coating station. That eliminates the sharp turns for example in a zig-zag adjustment.

The operators A, L, M, N are operating on functional variables in the non-time domain. Thus, if they are treated as FIR filters, there is no requirement that they be causal. In fact, it is often advantageous to employ a non-causal filter of zero phase shift (i.e. a symmetric filter), especially in control of CD processes. The output sequence of a general causal or non-causal FIR filter can be expressed as:

$$y(n) = \sum_{k=-m}^{n} h(k)x(n-k), \tag{7}$$

where the filter is of length m + n + 1, h(k) is the filter weight, and x is the input to the filter. A causal filter is obtained if m = 0, while a symmetric filter is obtained if m = n and h(-k) = h(k). The weights h bias the functional properties of the functional variable and x comprises the values of the functional variable.

The derivatives of integer or non-integer order are related to differintegration, which is not limited to integer order operations but is defined for arbitrary real or complex order. In the notation of the fractional calculus, we define the time domain differintegral operator $D^s$ of order s :

$$D^s = \frac{\partial^s}{\partial x^s}, \tag{8}$$

where s may be any real or complex number, not confined to integers. The differintegral operator of zero order (s = 0) is the identity operator. Applied to a signal f(x) that correspond to the functional values, the result is:

$$D^s(f(x)) \equiv \frac{\partial^s f(x)}{\partial x^s} \tag{9}$$

Functional variables are often variables sampled at various points in a continuous interval. Typical intervals would be a range of wavelengths for spectroscopic variables or positions across a sheet for profiles of paper properties. However, the domain on which a variable is measured need not be intrinsically a metric space, but can alternatively be an order space, provided it is continuous at least in principle. The measurements can be put in a desired order by associating a value of the controlled variable with a point in a scale of at least one dimension in which the measurement is performed. The values of the manipulated variables can be associated with a point in a scale of at least one dimension in which the actuators act. The scale can be expressed in a matrix form. The scale can be an order scale which cannot measure difference nor ratio of values meaningfully. The scale can be an interval scale which can measure meaningfully the difference of values but cannot measure meaningfully the ratio of the values. The scale can also be a relative scale which can measure meaningfully both difference and ratio of the values. The scale can be expressed as a matrix. All the scales maintain at least some information of the order of the measured values and hence the shape of the function.

An example of a continuous order space is a perceptual order system, such as a color order or brightness order. In a brightness order system, any sample can be ranked as brighter than some existing samples, and less bright than others, and the system remains consistent. All metric spaces are order spaces, but not all order spaces are metric spaces. However, for convenience, an order space may be mapped to a convenient metric space and treated thereafter as a metric space. For instance, color order spaces can be mapped to the CIE L*a*b* color metric space or to the OSA L-j-g color metric space, among others. Although these mappings are different, each is consistent with the original color order system. The mapping from an order system onto a metric system need not be unique, and the choice of a metric system can be made arbitrarily, such as for computational convenience.

A functional operator can be expressed as a matrix that is multiplied with the variable matrix (matrix of controlled variable or manipulated variable) and the product depends on the shape of the function that the values of the variable form (i. e. the product depends on the order of the values in the variable matrix). As an example of a structure of the matrix the simplest realization of a square matrix of a second derivative operator $\frac{\partial^2}{\partial x^2}$ is presented. The principal diagonal elements contain -2, and its neighbours on each side contain 1, all other elements being zero. A 5 x 5 matrix is for example:

$$\begin{bmatrix} -2 & 1 & 0 & 0 & 0 \\ 1 & -2 & 1 & 0 & 0 \\ 0 & 1 & -2 & 1 & 0 \\ 0 & 0 & 1 & -2 & 1 \\ 0 & 0 & 0 & 1 & -2 \end{bmatrix}$$

Note that the first and last rows do not contain the values of a full operator [1 -2 1], and thus contain the implicit assumption that the functional variable is zero outside the measurement interval. If the operator is longer (such as a FIR filter), then several rows at the start and end of the matrix may contain this kind of truncation. An extended second derivative which illustrates the truncation would be:

$$1\begin{bmatrix} -2 & 1 & 0 & 0 & 0 \\ 1 & -2 & 1 & 0 & 0 \\ 0 & 1 & -2 & 1 & 0 \\ 0 & 0 & 1 & -2 & 1 \\ 0 & 0 & 0 & 1 & -2 \end{bmatrix}1$$

where the values outside the matrix must be assumed implicitly or explicitly. In the example above, it was assumed that they were zero: x(-1)=x(N+1)=0. If an extrapolation model is available for extending the variable outside the measurement interval, then it is possible to include the truncated elements inside the matrix.
Suppose it is assumed that the functional variable can be extended by linear extrapolation outside its measurement interval. In this case, the extrapolated value is equal to the edge value plus the difference between edge and proximal values: x(-1) = x(0) + x(0) - x(1) = 2x(0) - x(1), and x(N+1)=x(N) + x(N) - x(N-1)=2x(N) - x(N-1). Substituting these values for the outside values gives a matrix:

$$\begin{bmatrix} 0 & 0 & 0 & 0 & 0 \\ 1 & -2 & 1 & 0 & 0 \\ 0 & 1 & -2 & 1 & 0 \\ 0 & 0 & 1 & -2 & 1 \\ 0 & 0 & 0 & 0 & 0 \end{bmatrix}$$

Alternatively, if it is assumed that the ouside value is equal to the closest edge value, x(-1) = x(0) and x(N+1) = x(N), then the matrix would become:

$$\begin{bmatrix} -1 & 1 & 0 & 0 & 0 \\ 1 & -2 & 1 & 0 & 0 \\ 0 & 1 & -2 & 1 & 0 \\ 0 & 0 & 1 & -2 & 1 \\ 0 & 0 & 0 & 1 & -1 \end{bmatrix}$$

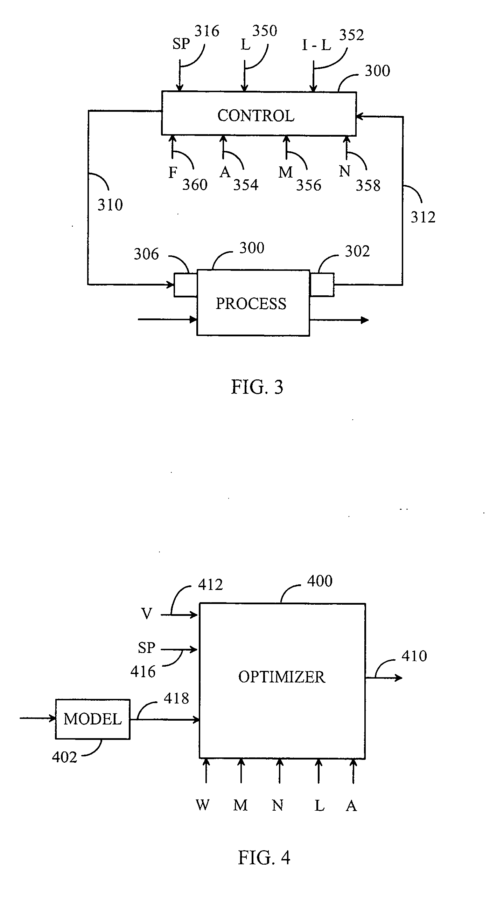

Let us now study the structure of the controller. Figure 3 presents a block diagram of a process with a functional control. The control unit 300 receives a process output signal 312 measured by the at least one sensor 302 from the process 302. The signal 316 comprises data of the target shape of the controlled property. That is similar to the prior art. The difference with the prior art is that the control unit 300 also receives at least one of the signals 350 - 358 comprising functional operators A, L, (I - L), M and N. Also the signal 360 that comprise the functional operator F may be input to the control unit 300. The signal 312 or the signal 310 comprises at least one functional variable. The control unit 300 outputs a signal 310 comprising at least one term in the at least one manipulated variable that drive the at least one actuator 306.

Figure 4 presents a block diagram of the control unit 300. The control unit comprises an optimizer 400 and a model bank 402. The control unit receives the measured signal comprising the at least one controlled variable, the signal 416 comprising the predetermined setpoint trajectory and a signal 418 from the model bank 402. The weights w, b and c and the functional operators A, F, L, (I - L), M and N are also input to the optimizer 400. The functional operators A, L, (I - L), M and N that perform according to the method at least one functional operation with at least one value of the at least one controlled variable 412 or of the at least one manipulated variable 410 in the optimizer 400. Also the functional operator F may be input to the optimizer 400. The functional operator F performs g-norm of the difference between the setpoint and the controlled variable. The optimizer 400 after performing the present method outputs a signal 410 comprising the manipulated variable. The signal 412 or the signal 410 comprises at least one functional variable.

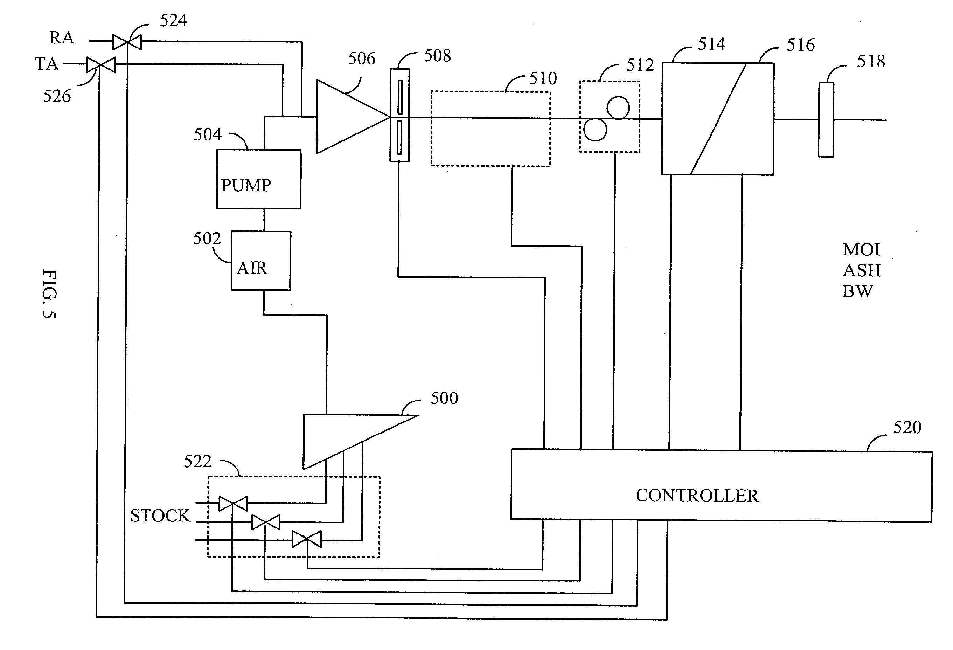

Finally, with reference to Figure 5, let us study a paper machine, which is one important object of application of the present solution. Figure 5 shows a general structure of a paper machine. One or more types of stock is fed into the paper machine through a wire pit silo 500 which is usually preceded by a blending chest and machine chest (not shown in Figure 5). The stock is metered into a short circulation controlled by a basis weight control or a grade change program. The blending chest and the machine chest can also be replaced by a separate mixing reactor (not shown in Figure 1) and stock metering is controlled by feeding partial stocks separately by means of valves or some other type of flow control means 522. In the wire pit silo 500, water is mixed into the stock to achieve the required consistency for the short circulation (dashed line from a former 510 to the wire pit silo 500). Sand (centrifugal cleaners), air (deculator) and other coarse material (pressure filter) are removed from the thus obtained stock using cleaning devices 502 and the stock is pumped by a pump 504 to the headbox 506. Before the headbox 506, a filler TA, such as kaolin, calcium carbonate, talc, chalk, titanium dioxide, diatomite, and a retention aid RA, such as inorganic, inartificial organic or synthetic water-soluble polymers, are added to the stock in a desired manner. The purpose of the filler is to improve the formation, surface properties, opacity, lightness and printing quality as well as to reduce the manufacturing costs. Retention aids RA, for their part, improve the retention of the fines and fillers while speeding up dewatering in a manner known per se. From the headbox 506, the stock is fed through the slice opening 508 of the headbox to the former 510 which is a fourdrinier in slow paper machines and a gap former in fast paper machines. In the former 510, water drains out of the web, and ash, fines and fibers are led to the short circulation. In the former 510, the stock is fed as a fiber web onto a wire, and the web is preliminarily dried and pressed in a press 512. The fiber web is primarily dried in dryers 514 and 516. In addition, there is usually at least one measuring beam 518 with at least one sensor for performing the CD measurements that are deconvoluted and refined with the present solution, for instance the moisture MOI of the fiber web, the caliber and the basis weight BW of the paper being made. The controller 520, which in this figure comprises the controller 300 in the figure 3, utilizes the measuring beam 518 to monitor the control measures, quality and/or grade change. The controller 520 preferably also measures the properties of the paper web elsewhere (e.g. at the same locations where controls are made). The controller 520 is part of the control arrangement based on automatic data processing. The paper machine, which in this application refers to both paper and board machines, also comprises a reel and size presses or a calender, for instance, but these parts are not shown in Figure 5. The general operation of a paper machine is known per se to a person skilled in the art and need, therefore, not be presented in more detail in this context.

The present solution incorporates the functional nature of the variables fully, by expanding the cost function to include further operator terms applied to the functional variables in a non-time domain. For example, in control of a cross-machine profile, some spatial frequency bands may be more damaging to product quality and thus it is advantageous to penalize them to a greater extent than others. By contrast, some frequency bands may be very weak or uncertainly known in the functional response model of the process, and thus may be omitted from consideration in the optimisation by use of appropriate functional operators in the cost function. Similarly, in manipulating the slice lip of a headbox, it is necessary to avoid excessively bending and thus damaging the slice bar, so it is advantageous to penalize the second spatial derivative of the slice shape. Other terms involving special functional norms on either the controlled variables or the manipulated variables may be needed in other cases. Similarly, one or more functional constraints may be imposed on the manipulated variables.

Although 2-norms are used in the examples, it is clear that alternative formulations can use other norms in the cost function. Also, the functional operators for functional variables were cited as being matrices, but obviously a range of mathematically equivalent expressions can be used.

Similarly, while the examples treated variables which were functions of a position coordinate, the invention is not confined to these. The invention can be applied to variables which are functions on other non-time domain coordinates, such as spectroscopic variables expressed in wavelength or frequency coordinates, or orientation distributions in angular coordinates or particle size distributions in volumetric or linear scale coordinates. Obviously, there may be more than one non-time domain on which a variable is functional, such as an image in two spatial dimensions or a radiance transfer factor array in two electromagnetic wavelength dimensions.

In practice, some variables may be functional, while others are not. In this case, the functional operators corresponding to distinct scalar variables are unity scalars, and the functional operators assigned to them are zero scalars. Thus, the MPC presented for functional variables generalises the use of MPC method.

Although the invention is described above with reference to an example shown in the attached drawings, it is apparent that the invention is not restricted to it, but can vary in many ways within the inventive idea disclosed in the attached claims.

The invention relates to a method and a controller for controlling a process. The process output signal or the control output signal comprises a functional variable and the process output signal is defined for at least one moment of time. The controller performs a functional operation on the signal comprising the functional variable to preserve the functional information. The controller also forms a cost function of at least the signal comprising the functional variable with the preserved functional information and performs an optimization of the cost function in which the preserved functional information is included. Finally, based on the optimization of the cost function the controller forms at least one process input signal for at least two separate moments of time for controlling the process.

**Claims**

1. A method for controlling a process wherein a process output signal or the control output signal comprises at least one functional variable; the method comprising:

   performing a functional operation in the non-time domain on the signal comprising the functional variable to preserve functional information; and
   forming at least one process input signal for at least two separate moments using the process output signal and the control output signal with the preserved functional information.

2. A method for controlling a process wherein a process output signal or a control output signal comprises at least one functional variable and the process output signal is defined for at least one moment; the method comprising:

   performing a functional operation in the non-time domain on the signal comprising the functional variable to preserve functional information;
   forming a cost function of at least the signal comprising the functional variable with the preserved functional information;
   performing optimisation of the cost function in which the preserved functional information is included; and
   forming based on the optimisation of the cost function at least one process input signal for at least two separate moments for controlling the process.

3. The method of claim 2, wherein the cost function comprises at least one penalty term and at least one of the following terms: a predicted error, a difference with the minimum cost state and a control change.

4. The method of claim 3, performing at least one functional operation in the non-time domain on the signal comprising the functional variable by an inner product operator to optimise at least one of the following terms: the predicted error, the difference with the minimum cost state and the control change.

5. The method of claim 4, wherein the inner product operator is a maximum absolute value operator.

6. The method of claim 2, wherein at least the functional variable is expressed as a matrix and the functional operator is a matrix.

7. The method of claim 3, forming a predicted error, a difference with the minimum cost state and a control change in the cost function using a norm operator.

8. The method of claim 7, wherein the norm operator is a 2-norm or an ∞-norm operator.

9. The method of claim 3, performing the functional operation of the penalty term by a second order derivative operator in the non-time domain.

10. The method of claim 2, wherein the process input signal comprises functional values of a manipulated profile of a cross-machine actuator in a continuous sheet-making process.

11. The method of claim 10, wherein the process is a continuous sheet-making process in which a cross-machine profile is controlled and the process output signal comprises functional values of the measured cross-machine profile of the sheet.

12. The method of claim 10, wherein the process is a continuous sheet-making process in which a spectroscopic property of the sheet is controlled and the process output signal comprises functional values of a spectroscopic property of the sheet.

13. The method of claim 2, wherein the cost function incorporates at least one functional constraint applied in the non-time domain to the functional variable of the process input signal, the constraint being specified as a defined functional constraint operator, and an upper limit function and a lower limit function for the values obtained by performing the functional operation in the non-time domain on the at least one functional variable in the process input signal using the functional constraint operator.

14. The method of claim 2, performing at least one defined functional operation on the signal comprising the functional variable by a weighted sum of at least one differintegral operator operating in the non-time domain.

15. The method of claim 14, wherein at least one differintegral operator is of integer order.

16. The method of claim 14, wherein at least one differintegral operator is of non-integer order.

17. The method of claim 2, performing at least one defined functional operation in the non-time domain on the signal comprising the functional variable by a weighted sum of at least one finite impulse response operation.

18. The method of claim 17, wherein at least one finite impulse response operation is performed by a low-pass, high-pass, band-pass, or band-stop operator.

19. The method of claim 17, wherein the finite impulse response operation has zero phase shift in the non-time domain.

20. The method of claim 2, limiting at least one functional variable in the process output signal by a constraint and performing optimisation of the cost function within the constraint.

21. The method of claim 2, performing a functional operation in the non-time domain on the process output signal by associating at least one value of the functional variable with a point in a scale of at least one dimension in which the measurement is performed.

22. The method of claim 2, performing a functional operation in the non-time domain on the control output signal by associating at least one value of the functional variable with a point in a scale of at least one dimension in which the actuators act.

**23.** The method of claim 3, wherein the cost function is expressed as:

$$Q = \sum_{i=1}^{n} w_{kj}\left(R_{kj} - V_{kj}\right)^{T} F_k \left(R_{kj} - V_{kj}\right) + \sum_{i=0}^{m}\left(L_k V_k\right)^{T}\left(L_k V_k\right) + \dots$$

$$+ \sum_{j=0}^{m} b_i \left(P_i - U_{ij}\right)^{T} G_i \left(P_i - U_{ij}\right) + \sum_{i=0}^{m}\left(M_i U_{ij}\right)^{T}\left(M_i U_{ij}\right) + \dots$$

$$+ \sum_{i=0}^{m} c_{ij} \Delta U_{ij}^{T} H_i \Delta U_{ij} + \sum_{i=0}^{m}\left(N_i U_{ij}\right)^{T}\left(N_i U_{ij}\right) + \dots$$

and the optimization of the cost function Q is expressed as:

$$\min_{U}\left\{ Q \mid U_{i,min} \leq U_{ij} \leq U_{i,max}, \left\| \Delta U_{ij} \right\| \leq \Delta U_{i,max}, A_{i,\min} < A_i U_{ij} < A_{i,\max} \right\}$$

where T is transpose, $b_i$ is a cost multiplier for manipulated variable $i$ and $c_{kj}$ is a weight factor for control action $i$ at the moment of time $j$, $w_{kj}$ is weight factor for error in controlled variable $k$ at moment $j$ and

| | |
|---|---|
| $F_k$ | is an inner product operator for controlled variable $k$, |
| $G_i$ | is an inner product operator for manipulated variable $i$, |
| $H_i$ | is an inner product operator for change in manipulated variable $i$, |
| $P_i$ | is a minimum cost state for manipulated variable $i$, |
| $R_{kj}$ | is a setpoint trajectory for controlled variable $k$ at moment j, |
| $U_{ij}$ | is a value of manipulated variable $i$ at moment j, |
| $V_{kj}$ | is a value of controlled variable $k$ at moment $j$, |
| $\Delta U_{ij}$ | is a change in manipulated variable i at moment j, |
| $L_k$ | is a functional penalty operator for controlled variable $k$, |
| $M_i$ | is a functional penalty operator for manipulated variable $i$, |
| $N_i$ | is a functional penalty operator for change in manipulated variable $i$, |
| $A_i$ | is the functional constraint operator for manipulated variable $i$, |
| $A_{i,min}$ and $A_{i,max}$ | are the minimum and maximum allowed states for the functional constraint for manipulated variable $i$, and |
| $U_{i,min}$ and $U_{i,max}$ | are the minimum and maximum allowed states for manipulated variable $i$, |
| $\Delta U_i$ | is the maximum allowed control action magnitude for manipulated variable $i$, and |

$$\sum_{i=1}^{n} w_{kj}\left(R_{kj} - V_{kj}\right)^{T} F_k \left(R_{kj} - V_{kj}\right)$$

is a predicted error cost term,,

$$\sum_{j=0}^{m} b_i \left(P_i - U_{ij}\right)^{T} G_i \left(P_i - U_{ij}\right)$$

is a cost term for the difference with the minimum cost state and

$$\sum_{i=0}^{m} c_{ij} \Delta U_{ij}^{T} H_i \Delta U_{ij}$$

is a penalty term for the control action magnitude,

$$\sum_{i=0}^{m}\left(L_k V_k\right)^T\left(L_k V_k\right), \ \sum_{i=0}^{m}\left(M_i U_{ij}\right)^T\left(M_i U_{ij}\right)$$

and

$$\sum_{i=0}^{m}\left(N_i U_{ij}\right)^T\left(N_i U_{ij}\right)$$

are penalty terms.

24. A controller for controlling a process wherein a process output signal or a control output signal comprises at least one functional variable, wherein the controller is arranged to
perform a functional operation in the non-time domain on the signal comprising the functional variable to preserve functional information; and
form at least one process input signal for at least two separate moments using the process output signal and the control output signal with the preserved functional information.

25. A controller for controlling a process wherein a process output signal or the control output signal comprises at least one functional variable and the process output signal is defined for at least one moment, wherein the controller is arranged to
perform a functional operation operation in the non-time domain on the signal comprising the functional variable to preserve functional information;
form a cost function of at least the signal comprising the functional variable with the preserved functional information;
perform optimisation of the cost function in which the preserved functional information is included; and
form based on the optimisation of the cost function at least one process input signal for at least two separate moments of time for controlling the process.

26. The controller of claim 25, wherein the controller is arranged to optimise the cost function by minimizing a penalty and at least one of the following terms: a predicted error, a difference with the minimum cost state, a control change.

27. The controller of claim 26, wherein the controller is arranged to perform at least one functional operation in the non-time domain on the signal comprising the functional variable by an inner product operator to optimise at least one of the following terms: the predicted error, the difference with the minimum cost state and the control change.

28. The controller of claim 27, wherein the inner product operator is a maximum absolute value operator.

29. The controller of claim 25, wherein the functional variable is expressed as a matrix and the functional operator is a matrix.

30. The controller of claim 26, wherein the controller is arranged to form the predicted error, the difference with the minimum cost state and the control change using a norm operator.

31. The controller of claim 30, wherein the norm operator is a 2-norm or an $\infty$-norm operator.

32. The controller of claim 26, wherein performing the functional operation of the penalty term by a second order derivative operator in the non-time domain.

33. The controller of claim 25, wherein the process input signal comprises functional values of a profile of a cross-machine actuator in a continuous sheet-making process.

34. The controller of claim 33, wherein process output signal comprises functional values of the cross-machine profile of a sheet property in a continuous sheet-making process.

35. The controller of claim 33, wherein process output signal comprises functional values of a spectroscopic property of a sheet in a continuous sheet-making process.

36. The controller of claim 25, wherein the cost function incorporates at least one functional constraint applied in the non-time domain to the functional variable of the process input signal, said constraint being specified as a defined functional constraint operator and an upper limit function and a lower limit function for the values obtained by applying the functional constraint operator to the at least one functional variable in the process input signal.

37. The controller of claim 25, wherein the controller is arranged to perform at least one functional operation on the signal comprising the functional variable by a weighted sum of at least one differintegral operator operating in the non-time domain.

38. The controller of claim 37, wherein at least one differintegral operator is of integer order.

39. The controller of claim 37, wherein at least one differintegral operator is of non-integer order.

40. The controller of claim 25, wherein the controller is arranged to perform at least one defined functional operation in the non-time domain on the control output signal comprising the functional variable by a weighted sum of at least one finite impulse response operation.

41. The controller of claim 40, wherein the controller is arranged to perform at least one finite impulse response operation using a low-pass, high-pass, band-pass, or band-stop operator.

42. The controller of claim 25, wherein at least one variable in the process output signal has a constraint and the controller is arranged to perform optimisation of the cost function within the constraint.

43. The controller of claim 40, wherein the controller is arranged to perform at least one finite impulse response operation having zero phase shift in the non-time domain.

44. The controller of claim 25, wherein the controller is arranged to perform a functional operation in the non-time domain on the control output signal by associating at least one value of the functional variable with a point in a scale of at least one dimension in which the measurement is performed.

45. The controller of claim 25, wherein the controller is arranged to perform a functional operation in the non-time domain on the process output signal by associating at least one value of the functional variable with a point in a scale of at least one dimension in which the actuators act.

46. The controller of claim 25, wherein the cost function Q is expressed as:

$$Q = \sum_{i=1}^{n} w_{kj} \left( R_{kj} - V_{kj} \right)^T F_k \left( R_{kj} - V_{kj} \right) + \sum_{i=0}^{m} \left( L_k V_k \right)^T \left( L_k V_k \right) + \ldots$$

$$+ \sum_{j=0}^{m} b_i \left( P_i - U_{ij} \right)^T G_i \left( P_i - U_{ij} \right) + \sum_{i=0}^{m} \left( M_i U_{ij} \right)^T \left( M_i U_{ij} \right) + \ldots$$

$$+ \sum_{i=0}^{m} c_{ij} \Delta U_{ij}^T H_i \Delta U_{ij} + \sum_{i=0}^{m} \left( N_i U_{ij} \right)^T \left( N_i U_{ij} \right) + ..$$

and the optimization of the cost function Q is expressed as:

$$\min_U \left\{ Q \mid U_{i,min} \le U_{ij} \le U_{i,max}, \left\| \Delta U_{ij} \right\| \le \Delta U_{i,max}, A_{i,\min} < A_i U_{ij} < A_{i,\max} \right\}$$

where T is transpose, $b_i$ is a cost multiplier for manipulated variable $i$ and $c_{kj}$ is a weight factor for control action $i$ at the moment $j$, $w_{kj}$ is weight factor for error in controlled variable k at moment $j$ and

| | |
|---|---|
| $F_k$ | is an inner product operator for controlled variable $k$, |
| $G_i$ | is an inner product operator for manipulated variable $i$, |
| $H_i$ | is an inner product operator for change in manipulated variable $i$, |
| $P_i$ | is a minimum cost state for manipulated variable $i$, |
| $R_{kj}$ | is a setpoint trajectory for controlled variable $k$ at moment j, |
| $U_{ij}$ | is a value of manipulated variable $i$ at moment j, |
| $V_{kj}$ | is a value of controlled variable $k$ at moment $j$, |
| $\Delta U_{ij}$ | is a change in manipulated variable i at moment j, |
| $L_k$ | is a functional penalty operator for controlled variable $k$, |
| $M_i$ | is a functional penalty operator for manipulated variable $i$, |
| $N_i$ | is a functional penalty operator for change in manipulated variable $i$, |
| $A_i$ | is the functional constraint operator for manipulated variable $i$, |
| $A_{i,min}$ and $A_{i,max}$ | are the minimum and maximum allowed states for the functional constraint for manipulated variable $i$, and |
| $U_{i,min}$ and $U_{i,max}$ | are the minimum and maximum allowed states for manipulated variable $i$, |
| $\Delta U_i$ | is the maximum allowed control action magnitude for manipulated variable $i$, and |

$$\sum_{i=1}^{n} w_{kj} \left( R_{kj} - V_{kj} \right)^T F_k \left( R_{kj} - V_{kj} \right)$$

is a predicted error cost term,,

$$\sum_{j=0}^{m} b_i \left( P_i - U_{ij} \right)^T G_i \left( P_i - U_{ij} \right)$$

is a cost term for the difference with the minimum cost state and

$$\sum_{i=0}^{m} c_{ij} \Delta U_{ij}^T H_i \Delta U_{ij}$$

is a penalty term for the control action magnitude,

$$\sum_{i=0}^{m} \left( L_k V_k \right)^T \left( L_k V_k \right), \quad \sum_{i=0}^{m} \left( M_i U_{ij} \right)^T \left( M_i U_{ij} \right)$$

and

$$\sum_{i=0}^{m} \left( N_i U_{ij} \right)^T \left( N_i U_{ij} \right)$$

are penalty terms.

PRIOR ART

FIG. 1

PRIOR ART

FIG. 2

SP 316    L 350    I - L 352

300

CONTROL

F 360    A 354    M 356    N 358

310                    312

306    300    302

PROCESS

FIG. 3

412    400

V

SP
416

OPTIMIZER    410

MODEL    418

402

W    M    N    L    A

FIG. 4

FIG. 5

MOI
ASH
BW

PUMP

AIR

STOCK

CONTROLLER